# EUROPEAN PATENT APPLICATION

(11) **EP 2 848 707 A1**
(43) Date of publication of application: **18.03.2015**
(21) Application number: 13761973.0
(22) Date of filing: 17.01.2013
(51) Int. Cl.: C22C 1/05, C22C 9/00, C22B 5/12

(54) **METHOD FOR PREPARING HIGH-STRENGTH HIGH-CONDUCTIVITY AND DISPERSION-STRENGTHENED COPPER**

(30) Priority: 13.03.2012 CN 201210065949
(71) Applicant: Universtiy of Science & Technology Beijing, Beijing 100088 (CN)
(72) Inventor: HAO, Junjie, Beijing 100083 (CN); GUO, Zhimeng, Beijing 100083 (CN); CHEN, Cunguang, Beijing 100083 (CN); LUO, Ji, Beijing 100083 (CN); GUO, Leichen, Beijing 100083 (CN); YANG, Weiwei, Beijing 100083 (CN); WANG, Wenwen, Beijing 100083 (CN)
(74) Representative: Díaz de Bustamante y Terminel, Isidro
(86) International application number: PCT/CN2013/070583
(87) International publication number: WO 2013/135109

(57) **Abstract**

The present invention provides a method for preparing high-strength and high-conductivity dispersion-strengthened copper, belonging to the technical field of oxide dispersion-strengthened materials. By taking an electronic circuit board copper-containing waste etching solution (HW22) as a raw material, and adding soluble salt corresponding to a dispersed phase (one, two or more of Al₂O₃, Y₂O₃, MgO, ZrO₂ and ThO₂), Cu(OH)₂/X(OH)ₙ composite powder is prepared by a chemical neutralization and precipitation process, and nano-oxide dispersion-strengthened copper is obtained through processes such as calcination, selective reduction and densification. The prepared nano-oxide dispersion-strengthened copper material has high strength, high conductivity and excellent high temperature softening resistance: its room temperature tensile strength is greater than 600MPa, its electrical conductivity is greater than 80% IACS (International Annealed Copper Standard), and the softening temperature is higher than 700 DEG C. The method provided by the present invention is simple in process, short in flow, low in energy consumption, and low in cost due to abundant and easily available raw materials, thereby being suitable for large-scale industrial production.

## Description

### Technical Field

The present invention relates to the technical field of powder metallurgy, and belongs to the category of oxide dispersion-strengthened materials. A production process for large-scale industrial preparation of Cu(OH)₂/X(OH)ₙ composite powder at low cost by utilizing an electronic circuit board waste etching solution (HW22), and preparation of a high-strength and high-conductivity copper-based oxide dispersion-strengthened material through processes such as calcination, reduction and densification is particularly provided.

### Technical Background

Dispersion-strengthened copper is a kind of novel structure functional material with good comprehensive performance, having high strength, high conductivity and excellent high temperature softening resistance concurrently, therefore it is considered to be a novel functional material that has great development potential and application prospect, and has attracted much attention from more and more countries. As the name suggests, strengthening phase particles of oxide dispersion-strengthened copper are oxides, which are uniformly dispersed and distributed in a copper matrix in a nano size. Different from intermetallic compound particles obtained by aging precipitation of precipitation-strengthened copper alloy, the strengthening phase particles also cannot be dissolved or alligatored at a high temperature close to the melting point of the copper matrix, so that dislocation motion and grain boundary sliding can be effectively hindered, the room temperature and high temperature strength of the alloy can be improved, meanwhile the electrical conductivity of the alloy is also not obviously reduced, and the wear resistance and corrosion resistance are also better. The appearance of dispersion-strengthened copper not only enriches the types of copper alloy, but also expands its using temperature range. It has been widely applied to commutators of resistance welding electrodes, large-scale integrated circuit lead frames, heater leads, electrical contact materials, platinotron structural materials, conticaster crystallizers and helicopter starting motors, commutators of immersion fuel pumps, plasma action parts in nuclear fusion systems, combustion liners, wings or vane leading edges of advanced aircrafts, etc.

The development and research of high-strength and high-conductivity dispersion-strengthened copper in developed countries such as the U.S. and Japan are in full swing, with many products entering practical stages. Due to limitation on its application fields, various countries all strictly keep research achievements on material technologies confidential. The research of such material started rather late in China, and thus its large-scale application has not been realized yet. The main problems include some relatively low performance, relatively high production cost, unsuitability for batch production, etc. Therefore, to explore a new material and a preparation process thereof, improve the performance of the material, reduce the production cost, and promote its development and application is crucial to successful application of high-strength and high-conductivity dispersion-strengthened copper.

At present, numerous preparation processes for dispersion-strengthened copper have been developed at home and abroad, mainly including a powder metallurgic method, a mechanical alloying method, a composite electrodeposition method, a thermal reduction method, an internal oxidation method, a reactive spray-deposition method, etc., wherein, the internal oxidation method and the mechanical alloying method are mainly adopted in commercial production of high-strength and high-conductivity dispersion-strengthened copper at home and abroad. However, the internal oxidation method has the major disadvantages of complex process, long cycle, relatively high production cost, difficulty in quality control, and especially more difficulty in control of the amount of oxygen and oxidization time, therefore the requirements for equipment and process control of the internal oxidation method are extremely strict, meanwhile as an oxidant retained inside is difficult to eliminate completely, certain impact on the performance of the material can be caused by tissue defects such as cracks, cavities and inclusions which easily occur. While the mechanical alloying method has the shortcomings that the particle size of a second phase (strengthening phase) is not fine enough, its particle diameter distribution is wide, incorporation of impurities easily occurs and the like, and due to the restrictions of the process and equipment, large-scale production has not been realized.

### Summary of the Invention

The object of the present invention is to provide a method for industrial preparation of high-strength and high-conductivity nano-oxide dispersion-strengthened copper which is simple in process, controllable in course and low in cost, and can obtain a dispersed phase with tiny particles, uniform size and best distribution state, so as to overcome the shortcomings such as high cost, difficulty in control and long production cycle of existing methods, and realize low-cost, high-efficiency and environmentally-friendly large-scale production of high-strength and high-conductivity dispersion-strengthened copper.

Printed circuits are produced by adopting a circuit board copper foil cladding etching process in the electronic printed circuit board (referred to as PCB) industry, thus producing an enormous quantity of waste etching solutions with high copper content (generally the copper content in the waste solutions is 120-180g/L). There exist two types of waste etching solutions: (1) an acidic copper chloride waste etching solution, mainly containing copper chloride and hydrochloric acid; (2) an alkaline copper chloride waste etching solution, mainly containing copper chloride-ammonia complex and ammonium chloride. Therefore, preparation of oxide dispersion-strengthened copper by adopting such abundant and cheap copper-containing waste etching solutions solves the problem of high cost of raw materials.

The technical scheme adopted by the present invention is as follows: by adopting the copper-containing waste etching solution produced by circuit board manufacturing enterprises as a raw material, and adding soluble salt corresponding to a dispersed phase to the waste etching solution, Cu(OH)₂/X(OH)ₙ composite powder is obtained by a chemical neutralization and precipitation process. Nano-oxide dispersion-strengthened copper powder is formed after the Cu(OH)₂/X(OH)ₙ composite powder undergoes the processes such as calcination and selective reduction, and then a densification process is carried out. Nano-oxide particles dispersed and distributed in a matrix can hinder grain growth, and stable grain size is easy to obtain, therefore a relatively high sintering temperature can be adopted during cold-pressing and sintering to obtain high density.

A method for preparing high-strength and high-conductivity dispersion-strengthened copper comprises the following processing steps:
1. preparation of Cu(OH)₂/X(OH)ₙ composite powder
   (1) taking an acidic copper chloride waste etching solution as a raw material: adding soluble salt corresponding to a dispersed phase to the acidic waste etching solution, mixing and dissolving, then feeding together with a sodium hydroxide solution and entering a coprecipitation reaction kettle, controlling PH value of the solution to produce Cu(OH)₂/X(OH)ₙ precipitation, and filtering, washing and drying precipitate to obtain Cu(OH)₂/X(OH)ₙ composite powder;
   (2) taking an alkaline copper chloride waste etching solution as a raw material: simultaneously feeding the alkaline waste etching solution, the soluble salt corresponding to the dispersed phase, and hydrochloric acid, entering the coprecipitation reaction kettle, controlling PH value of the solution to produce Cu(OH)₂/X(OH)ₙ precipitation, and filtering, washing and drying precipitate to obtain Cu(OH)₂/X(OH)ₙ composite powder;
   (3) taking the acidic copper chloride waste etching solution and the alkaline copper chloride waste etching solution as raw materials: adding the soluble salt corresponding to the dispersed phase to the acidic waste etching solution, mixing and dissolving, then entering the coprecipitation reaction kettle together with the alkaline waste etching solution, controlling PH value of the solution to produce Cu(OH)₂/X(OH)ₙ precipitation, and filtering, washing and drying precipitate to obtain Cu(OH)₂/X(OH)ₙ composite powder.
2. calcination: placing the Cu(OH)₂/X(OH)ₙ composite powder into a calcining furnace, with the calcination temperature of 300-500 DEG C, and the calcination time of 1-2h, to obtain composite oxide power;
3. selective reduction: reducing the above composite oxide power in a hydrogen protective atmosphere, with the reduction temperature of 400-900 DEG C, and the reduction time of 1-2h, to obtain nano-oxide dispersion-strengthened copper powder with extremely tiny dispersed phase particles that are uniformly distributed;
4. densification
   (1) cold-pressing and sintering: cold-pressing and molding the dispersion-strengthened copper powder, and adopting mould pressing or cold isostatic pressing in a cold-pressing and molding process, with the pressing pressure of mould pressing being 500-900MPa, and the dwell time of 5-30s; with the pressure of cold isostatic pressing being 150-300MPa, and the dwell time of 30-90min; adopting vacuum or oxygen-free atmosphere sintering, with the vacuum degree of 10⁻¹-10⁻²Pa, the oxygen-free atmosphere being hydrogen (H₂), argon (Ar) or a gas mixture of the two, the sintering temperature of 800-1,000 DEG C, and the temperature retention time of 1-4h.
   (2) hot extrusion: packing the dispersion-strengthened copper powder into a special sheath, and after vacuumizing in an environment with the vacuum degree of 10⁻¹-10⁻² Pa for 1-2h, heating up to 600-900 DEG C for hot extrusion, so as to consolidate and mold the dispersion-strengthened copper powder.

Preferably, the dispersed phase is one, two or more of Al₂O₃, Y₂O₃, MgO, ZrO₂ and ThO₂, and its mass fraction in oxide dispersion-strengthened copper is 0.1%-2.0%.

Preferably, the soluble salt corresponding to the dispersed phase is one, two or more of chloride, nitrate and sulfate.

X in the Cu(OH)₂/X(OH)ₙ composite powder is a metal element corresponding to the dispersed phase.

By adopting the above technical scheme, the present invention has the following beneficial effects:
1. The raw materials are abundant and easy to obtain, and the cost is low.
2. The time is short, the energy is saved, and the cost is reduced.
3. The process is simple, the flow is short, and the production efficiency is high, thereby being suitable for industrial mass production.
4. Cold-pressing and sintering molding or hot extrusion molding can be adopted in the densification process according to different using situations. The cold-pressing and sintering process is relatively low in cost, with the average density of products being higher than 97%; and the hot extrusion process is relatively high in cost, with the average density of products being higher than 99%, and the performance being better than that of products obtained by cold-pressing and sintering.
5. The room temperature tensile strength of final products is greater than 600MPa, the electrical conductivity is greater than 80% IACS (International Annealed Copper Standard), and the softening temperature is higher than 700 DEG C. The final products have relatively high mechanical properties, good electrical and heat conducting properties, and excellent high temperature softening resistance.

### Description of Accompanying Drawings

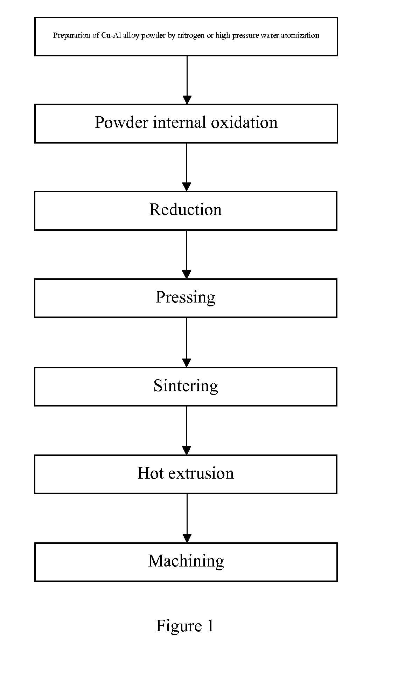

Figure 1 is a process flow diagram of preparation of aluminium oxide dispersion-strenghtened copper by using the internal oxidation method.

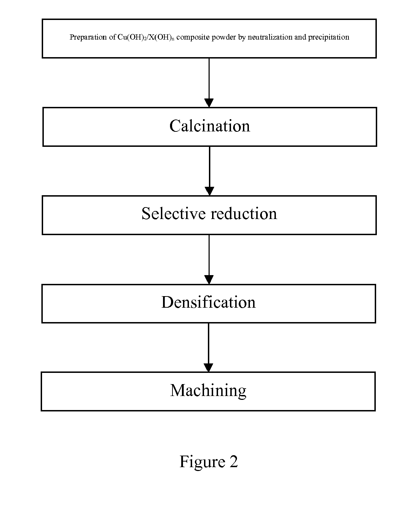

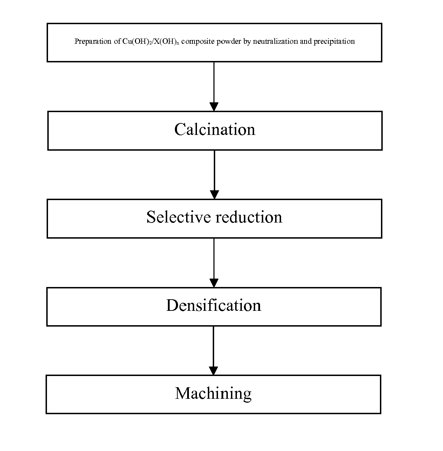

Figure 2 is a process flow diagram of preparation of oxide dispersion-strengthened copper by using the method provided by the present invention.

### Detailed Embodiments

### Example 1: 0.1wt% Al₂O₃ dispersion-strengthened copper

1. Preparation of Cu(OH)₂/Al(OH)₃ composite powder: Al(NO₃)₃ is added to an acidic waste etching solution (with copper content of 128g/L) according to a proportion that the mass fraction of Al₂O₃ in dispersion-strengthened copper is 0.1%, the mixture is mixed and dissolved, and then fed into a coprecipitation reaction kettle together with a NaOH solution, pH value of the solution is controlled to produce Cu(OH)₂/Al(OH)₃ precipitation, and precipitate is filtered, washed and dried to obtain Cu(OH)₂/Al(OH)₃ composite powder.
2. Calcination: the Cu(OH)₂/Al(OH)₃ composite powder is placed into a calcining furnace, with the calcination temperature of 300 DEG C, and the calcination time of 2h, to obtain CuO/Al₂O₃ composite power.
3. Selective reduction: the CuO/Al₂O₃ composite power is reduced in a hydrogen protective atmosphere, with the reduction temperature of 400 DEG C, and the reduction time of 2h, to obtain nano-Al₂O₃ dispersion-strengthened copper powder with extremely tiny Al₂O₃ particles that are uniformly distributed.
4. Densification: the above dispersion-strengthened copper powder is molded by mould pressing, with the pressing pressure of 500MPa, and the dwell time of 10s. H₂ atmosphere sintering is adopted, with the sintering temperature of 950 DEG C, and the temperature retention time of 1h.

### Example 2: 1.0wt% Y₂O₃ dispersion-strengthened copper

1. Preparation of Cu(OH)₂/Y(OH)₃ composite powder: according to a proportion that the mass fraction of Y₂O₃ in dispersion-strengthened copper is 1.0%, an alkaline waste etching solution (with copper content of 153g/L), YCl•6H₂O and hydrochloric acid are fed into a coprecipitation reaction kettle simultaneously, pH value of the solution is controlled to produce Cu(OH)₂/Y(OH)₃ precipitation, and precipitate is filtered, washed and dried to obtain Cu(OH)₂/Y(OH)₃ composite powder.
2. Calcination: the Cu(OH)₂/Y(OH)₃ composite powder is placed into a calcining furnace, with the calcination temperature of 400 DEG C, and the calcination time of 1h, to obtain CuO/Y₂O₃ composite power.
3. Selective reduction: the CuO/Y₂O₃ composite power is reduced in a hydrogen protective atmosphere, with the reduction temperature of 600 DEG C, and the reduction time of 1.5h, to obtain nano-Y₂O₃ dispersion-strengthened copper powder with extremely tiny Y₂O₃ particles that are uniformly distributed.
4. Densification: the above dispersion-strengthened copper powder is packed into a special sheath, and after vacuumizing in an environment with the vacuum degree of 2×10⁻² Pa for 1h, the temperature is raised to 700 DEG C for hot extrusion, so as to consolidate and mold the dispersion-strengthened copper powder.

### Example 3: 2.0wt% ZrO₂ dispersion-strengthened copper

1. Preparation of Cu(OH)₂/Zr(OH)₄ composite powder: ZrCl₄ is added to an acidic waste etching solution (with copper content of 176g/L) according to a proportion that the mass fraction of ZrO₂ in dispersion-strengthened copper is 2.0%, the mixture is mixed and dissolved, and then fed into a coprecipitation reaction kettle together with an alkaline waste etching solution (with copper content of 172g/L), pH value of the solution is controlled to produce Cu(OH)₂/Zr(OH)₄ precipitation, and precipitate is filtered, washed and dried to obtain Cu(OH)₂/Zr(OH)₄ composite powder.
2. Calcination: the Cu(OH)₂/Zr(OH)₄ composite powder is placed into a calcining furnace, with the calcination temperature of 500 DEG C, and the calcination time of 1.5h, to obtain CuO/ZrO₂ composite power.
3. Selective reduction: the CuO/ZrO₂ composite power is reduced in a hydrogen protective atmosphere, with the reduction temperature of 900 DEG C, and the reduction time of 1h, to obtain nano-ZrO₂ dispersion-strengthened copper powder with extremely tiny ZrO₂ particles that are uniformly distributed.
4. Densification: the above dispersion-strengthened copper powder is molded by cold isostatic pressing, with the pressing pressure of 200MPa, and the dwell time of 1h. Vacuum sintering is adopted, with the vacuum degree of 5×10⁻²Pa, the sintering temperature of 800 DEG C, and the temperature retention time of 2h.

The above content is further detailed description made for the present invention in conjunction with specific preferred embodiments, and thus the specific embodiments of the present invention should not be considered to be limited to this description. For persons ordinarily skilled in the art, many deductions or substitutions can also be made, and all should be understood to fall within the protective scope of the present invention.

## Claims

1. A method for preparing high-strength and high-conductivity dispersion-strengthened copper, **characterized by** comprising the following processing steps:
1) preparation of Cu(OH)₂/X(OH)ₙ composite powder: taking an acidic copper chloride waste etching solution, an alkaline copper chloride waste etching solution or a mixture of the two as a raw material, and adding soluble salt corresponding to a dispersed phase to obtain Cu(OH)₂/X(OH)ₙ composite powder by a chemical neutralization and precipitation process; wherein the dispersed phase is one, two or more of Al₂O₃, Y₂O₃, MgO, ZrO₂ and ThO₂, and its mass fraction in nano-oxide dispersion-strengthened copper is 0.1%-2.0%;
2) calcination: placing the Cu(OH)₂/X(OH)ₙ composite powder into a calcining furnace, with the calcination temperature of 300-500 DEG C, and the calcination time of 1-2h, to obtain composite oxide power;
3) selective reduction: reducing the composite oxide power in a hydrogen protective atmosphere, with the reduction temperature of 400-900 DEG C, and the reduction time of 1-2h, to obtain nano-oxide dispersion-strengthened copper powder with extremely tiny dispersed phase particles that are uniformly distributed;
4) densification: consolidating and molding the nano-oxide dispersion-strengthened copper powder by adopting a cold-pressing and sintering process or a hot extrusion process to obtain a nano-oxide dispersion-strengthened copper material.

2. The method for preparing high-strength and high-conductivity dispersion-strengthened copper according to claim 1, **characterized in that**: the cold-pressing and sintering process is as follows:
1) pressing: adopting mould pressing or cold isostatic pressing, with the pressing pressure of mould pressing being 500-900MPa, and the dwell time of 5-30s; with the pressure of cold isostatic pressing being 150-300MPa, and the dwell time of 30-90min;
2) sintering: adopting vacuum or oxygen-free atmosphere sintering, with the vacuum degree of 10-¹-10⁻²Pa, the oxygen-free atmosphere being hydrogen (H₂), argon (Ar) or a gas mixture of the two, the sintering temperature of 800-1,000 DEG C, and the temperature retention time of 1-4h.

3. The method for preparing high-strength and high-conductivity dispersion-strengthened copper according to claim 1, **characterized in that**: the hot extrusion process is as follows: packing the dispersion-strengthened copper powder into a special sheath, and after vacuumizing in an environment with the vacuum degree of 10⁻¹-10⁻² Pa for 1-2h, heating up to 600-900 DEG C for hot extrusion, so as to consolidate and mold the dispersion-strengthened copper powder.

4. The method for preparing high-strength and high-conductivity dispersion-strengthened copper according to claim 1, **characterized in that**: the soluble salt corresponding to the dispersed phase is one, two or more of chloride, nitrate and sulfate.

5. The method for preparing high-strength and high-conductivity dispersion-strengthened copper according to claim 1, **characterized in that**: X in the Cu(OH)₂/X(OH)ₙ composite powder is a metal element corresponding to the dispersed phase.
